# EUROPÄISCHE PATENTANMELDUNG

(11) **EP 1 798 453 A2**
(43) Veröffentlichungstag der Anmeldung: **20.06.2007**
(21) Anmeldenummer: 06024777.2
(22) Anmeldetag: 30.11.2006
(51) Int. Cl.: F16J 15/08

(54) **Flachdichtung, insbesondere Zylinderkopfdichtung**

(30) Priorität: 14.12.2005 DE 102005059720; 14.03.2006 DE 102006011696
(71) Anmelder: ElringKlinger AG, 72581 Dettingen (DE)
(72) Erfinder: Werner, Hans-Peter, Dr., 70794 Filderstadt (DE); Gruhler, Tobias Michael, 72793 Pfullingen (DE); Schenk, Peter, 72531 Hohenstein (DE); Fritz, Wolfgang, 72555 Metzingen (DE); Werz, Ulrich, 72581 Dettingen (DE); Baur, Matthias, 72587 Römerstein (DE); Tiefenbach, Thomas, 72581 Dettingen (DE)
(74) Vertreter: Hoeger, Stellrecht & Partner Patentanwälte

(57) **Zusammenfassung**

Flachdichtung mit einer Dichtungsplatte, welche mindestens eine federelastische Eigenschaften aufweisende Metallblechlage (10) aus Federstahlblech aufweist, die mit mindestens einer unter Einsatzbedingungen der Flachdichtung einer dynamischen Druckbelastung ausgesetzten, in ihrer Höhe federelastisch verformbaren Sicke (14) versehen ist und zur Erzielung eines größeren Arbeitsbereichs der Sicke (14) ohne Verminderung ihrer Dauerhaltbarkeit aus einem austenitischen Stahl nach der Europäischen Norm EN 10088-2-1.4372 besteht.

## Beschreibung

Die Erfindung betrifft eine Flachdichtung mit einer Dichtungsplatte, welche mindestens eine federelastische Eigenschaften aufweisende Metallblechlage aus einem Federstahlblech aufweist, die mit mindestens einer unter Einsatzbedingungen der Flachdichtung einer dynamischen Druckbelastung ausgesetzten und in ihrer Höhe federelastisch verformbaren Sicke versehen ist.

Im Folgenden soll die Erfindung anhand einer Zylinderkopfdichtung erläutert werden; die Erfindung eignet sich aber auch für andere, zumindest im Wesentlichen metallische Flachdichtungen, wie beispielsweise eine zwischen einem Zylinderkopf und einem Auspuffkrümmer eines Mehrzylinder-Verbrennungsmotors anzuordnende Flachdichtung oder eine andere, zwischen Bauteilflächen einzuspannende Flachdichtung, welche im Betrieb einer Belastung mit wechselnden Pressungskräften ausgesetzt ist.

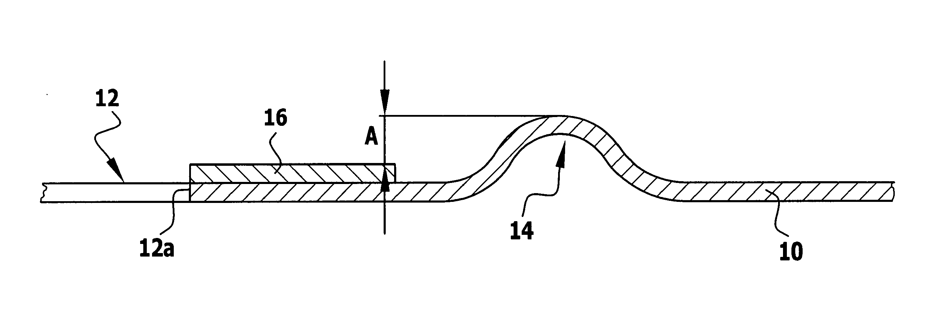

Bei der in Rede stehenden Sicke wird es sich im Allgemeinen um eine Abdichtsicke handeln, mit der um eine Fluid-Durchgangsöffnung (für den Durchtritt gasförmiger oder flüssiger Medien) der Dichtungsplatte herum abgedichtet wird. Die Sicke könnte aber auch eine reine Abstützsicke sein, die nicht der Abdichtung dient, sondern nur der örtlichen Abstützung einer Bauteil-Dichtfläche (z. B. der Dichtfläche eines Zylinderkopfs), wenn die Flachdichtung zwischen Bauteil-Dichtflächen eingespannt ist; derartige Abstützsicken zeigen z. B. die Figuren 1, 3, 5 und 6 des US-Patents 5 427 389.

Schließlich sei noch darauf hingewiesen, dass es sich bei der Sicke um eine sogenannte Vollsicke, aber auch um eine sogenannte Halbsicke handeln kann - eine Vollsicke hat im Querschnitt eine ungefähr kreisbogenförmige Gestalt, der Querschnitt einer Halbsicke entspricht einer schrägen Stufe.

Eine im Betrieb einer wechselnden Druckbelastung ausgesetzte höhenelastische Sicke ist dem Risiko ausgesetzt, dass wenn sie durch eine verhältnismäßig hohe Pressung immer wieder zu stark abgeflacht wird, die Sicken nach längerer Betriebszeit durch Rissbildung zerstört wird. Deshalb ist es bei zumindest im Wesentlichen metallischen Flachdichtungen, deren Dichtungsplatte eine einzige Metallblechlage oder mehrere aufeinandergeschichtete Metallblechlagen aufweist, bekannt, der Sicke einen Verformungsbegrenzer, d. h. einen sogenannten Stopper, zuzuordnen, durch den eine übermäßige Abflachung der Sicke beim Einbau der Flachdichtung und im Betrieb vermieden wird. Bei einer solchen Flachdichtung, bei der durch eine höhenelastische Sicke z. B. um eine Fluid-Durchgangsöffnung herum abgedichtet wird, hat der Stopper z. B. die Form eines Blechrings, der auf der mit der Sicke versehenen Metallblechlage neben der Sicke angeordnet ist und ebenso wie die letztere die Fluid-Durchgangsöffnung umschließt, wobei der Stopper eine Dicke aufweist, welche geringer als die Höhe der Sicke ist, so dass letztere den Stopper um ein Maß überragt, welches gleich dem Arbeitsbereich (sozusagen gleich der Schwingungshöhe) der Sicke ist. Vor allem bei modernen Hubkolben-Verbrennungsmotoren sind jedoch die Schwankungen der Breite des sogenannten Dichtspalts, welcher von den Bauteil-Dichtflächen von Zylinderkopf und Motorblock, zwischen denen die Zylinderkopfdichtung einzuspannen ist, begrenzt wird, verhältnismäßig groß, so dass auch der Arbeitsbereich einer Sicke verhältnismäßig groß sein muss, damit die Sicke in jedem Betriebszustand ihre Funktion erfüllen kann.

Vor allem für Zylinderkopfdichtungen wird von den Dichtungsherstellern für die mit Sicken versehenen Federstahlblechlagen bislang fast ausschließlich ein Federstahlblech aus einem austenitischen Stahl nach der europäischen Norm EN 10088-2-1.4310 verwendet - ein solcher Stahl enthält neben Kohlenstoff, Silicium, Mangan und Chrom mindestens 6 % Nickel.

Bei der Firma ElringKlinger AG wurde nun überraschenderweise festgestellt, dass sich bei sonst gleichen Abmessungen der Arbeitsbereich einer Sicke ohne Verminderung der Dauerhaltbarkeit der Sicke dadurch vergrößern lässt, dass für das Federstahlblech ein ähnlicher Stahl verwendet wird, welcher etwas weniger Nickel, aber etwas mehr Mangan als der Stahl nach der europäischen Norm EN 10088-2-1.4310 enthält, nämlich ein austenitischer Stahl nach der europäischen Norm EN 10088-2-1.4372. Erfindungsgemäß besteht also bei einer Flachdichtung der eingangs erwähnten Art das Federstahlblech aus einem austenitischen Stahl nach der europäischen Norm EN 10088-2-1.4372. Dadurch lässt sich bei sonst gleichen Abmessungen z. B. bei einer Zylinderkopfdichtung der Arbeitsbereich einer Abdichtsicke um größenordnungsmäßig 1 bis 2 µm vergrößern, ein Wert, welcher zwar klein erscheint, angesichts der Größe der zeitlichen Schwankungen der Dichtspaltbreite jedoch nicht unerheblich ist. Ferner lässt sich durch die Erfindung die Dauerhaltbarkeit einer Sicke verbessern, und zwar im Vergleich zu einer Sicke mit gleich großem Arbeitsbereich. Durch die vorliegende Erfindung lässt sich also nicht nur die Dauerhaltbarkeit und/oder der Arbeitsbereich einer höhenelastischen Sicke vergrößern, sondern es lassen sich auch die für eine Flachdichtung der eingangs erwähnten Art erforderlichen Materialkosten senken, da Nickel ein verhältnismäßig teures Legierungselement ist, dessen Anteil gegenüber einem Stahlblech nach der europäischen Norm EN 10088-2-1.4310 geringer ist - Mangan ist deutlich billiger als Nickel, so dass trotz eines höheren Mangananteils des erfindungsgemäß zu verwendenden Stahlblechs die Herstellkosten einer Flachdichtung durch Anwendung der vorliegenden Erfindung verringert werden können.

Bei bevorzugten Ausführungsformen der erfindungsgemäßen Flachdichtung wird für die mit der mindestens einen Sicke versehene Stahlblechlage ein derart kaltgewalztes Stahlblech verwendet, dass seine Zugfestigkeit ungefähr der Festigkeitsklasse C1300 entspricht; insbesondere soll die Zugfestigkeit zwischen 1350 und 1500 N/mm² liegen, die Streckgrenze mindestens 1050 N/mm² betragen und die durch Norm definierte Dehnung A80 5 bis 22 %.

Im Hinblick auf ihre Eigenschaften besonders bevorzugt werden erfindungsgemäße Flachdichtungen, bei denen der Stahl die folgende chemische Zusammensetzung aufweist:

| | | | |
|---|---|---|---|
| C | max. | 0,15 | % |
| Si | max. | 1,0 | % |
| Mn | | 5,5 - 7,5 | % |
| P | max. | 0,045 | % |
| S | max. | 0,015 | % |
| N | | 0,05 - 0,25 | % |
| Cr | | 16,0 - 18,0 | % |
| Ni | | 3,5 - 4,5 | %, |

Rest Fe.

Im Folgenden werden noch weitere Merkmale der Erfindung erörtert, und zwar anhand der beigefügten Zeichnung, welche einen Schnitt durch einen Teil einer Metallblechlage einer erfindungsgemäßen Flachdichtung zeigt.

Die Zeichnung zeigt einen Teil einer Metallblechlage 10, aus der eine nur teilweise dargestellte, insbesondere kreisrunde Öffnung 12 ausgestanzt wurde, bei der es sich z. B. um eine Brennraum-Durchgangsöffnung einer Zylinderkopfdichtung handeln kann. In die Metallblechlage 10 ist eine als Vollsicke gestaltete Abdichtsicke 14 eingeprägt, und zwar im Abstand vom Rand 12a der Öffnung 12, und zwischen dem Öffnungsrand 12a und der Sicke 14 ist auf die Metallblechlage 10 ein Blechring aufgelegt und an der Metallblechlage 10 z. B. durch Punktschweißen befestigt, welcher die Öffnung 12 gleichfalls kreisringförmig umschließt und einen Stopper 16 bildet, den die Sicke 14 um das Maß A überragt, das dem Arbeitsbereich der Sicke 14 entspricht.

Bei einer bevorzugten Ausführungsform hat der Stahl der Metallblechlage 10 die folgende chemische Zusammensetzung (wobei nur die wesentlichen Legierungsbestandteile - neben Fe - angegeben werden):

| C | N | Mn | P | S | Si | Cr | Ni |
|---|---|---|---|---|---|---|---|
| 0,10 | 0,10 | 6,30 | 0,028 | 0,0005 | 0,46 | 16,40 | 3,90 |

## Patentansprüche

1. Flachdichtung mit einer Dichtungsplatte, welche mindestens eine federelastische Eigenschaften aufweisende Metallblechlage aus Federstahlblech aufweist, die mit mindestens einer unter Einsatzbedingungen der Flachdichtung einer dynamischen Druckbelastung ausgesetzten, in ihrer Höhe federelastisch verformbaren Sicke versehen ist, wobei das Federstahlblech aus einem austenitischen Stahl nach der europäischen Norm EN 10088-2-1.4372 besteht.

2. Flachdichtung nach Anspruch 1, bei der das für die Metallblechlage verwendete Stahlblech ein derart kaltgewalztes Stahlblech ist, dass seine Zugfestigkeit der Festigkeitsklasse C1300 entspricht.

3. Flachdichtung nach Anspruch 1 oder 2, wobei der Stahl die folgende chemische Zusammensetzung aufweist:
| | | | |
|---|---|---|---|
| C | max. | 0,15 | % |
| Si | max. | 1,0 | % |
| Mn | | 5,5 - 7,5 | % |
| P | max. | 0,045 | % |
| S | max. | 0,015 | % |
| N | | 0,05 - 0,25 | % |
| Cr | | 16,0 - 18,0 | % |
| Ni | | 3,5 - 4,5 | % |
Rest Fe.

4. Flachdichtung nach einem der Ansprüche 1 bis 3, wobei die Sicke eine Vollsicke ist.

5. Flachdichtung nach einem der Ansprüche 1 bis 4, wobei der Sicke ein ihre Abflachung begrenzender Stopper zugeordnet ist.
